# EUROPEAN PATENT SPECIFICATION

(11) **EP 2 296 964 B1**
(45) Date of publication and mention of the grant of the patent: **19.12.2012**
(21) Application number: 08874230.9
(22) Date of filing: 09.05.2008
(51) Int. Cl.: B64C 7/00, B64C 9/16, B64C 3/58, B64C 9/02, B64C 9/04

(54) **AIRCRAFT FILLET FAIRINGS WITH FIXED AND MOVEABLE PORTIONS, AND ASSOCIATED SYSTEMS AND METHODS**
FLUGZEUGHOHLKEHLENVERKLEIDUNGEN MIT FESTGELEGTEN UND BEWEGLICHEN TEILEN UND ZUGEHÖRIGE SYSTEME UND VERFAHREN
CARÉNAGES DE RACCORDEMENT D'AVION AVEC PARTIES FIXE ET MOBILE, ET SYSTÈMES ET PROCÉDÉS ASSOCIÉS

(43) Date of publication of application: 23.03.2011
(73) Proprietor: The Boeing Company, Chicago, IL 60606-2016 (US)
(72) Inventor: LACY, Douglas S., Bothell Washington 98011 (US); BENN, Gregory S., Sammamish Washington 98074 (US); WHEATON, James M., Collierville Tennessee 38017 (US); SANTINI, Gregory M., Bothell Washington 98021 (US); SAKURAI, Seiya, Seattle Washington 98144 (US); SMITH, Lawrence D., Everett Washington 98201 (US)
(74) Representative: McLeish, Nicholas Alistair Maxwell
(86) International application number: PCT/US2008/063326
(87) International publication number: WO 2009/136949

(56) References cited:
- EP-A- 1 857 360
- DE-U1- 9 113 090
- DE-U1- 29 703 039
- US-A- 2 526 929
- US-A- 3 880 384
- US-A- 4 471 925
- US-A- 4 576 347

## Description

### TECHNICAL FIELD

The present disclosure is directed generally to aircraft fillet fairings (e.g., for wing/body junctions) with fixed and moveable portions, and associated systems and methods.

### BACKGROUND

Modern high-speed aircraft generally have thin wings that provide a low drag profile during high-speed or cruise flight. The wings of these aircraft often include various moveable surfaces to provide aircraft control and/or to configure the aircraft for low-speed operations (e.g., take-off and landing). For example, in addition to carrying fuel, the wings of a high-speed transport aircraft typically include aileron surfaces, spoiler surfaces, leading edge devices, and trailing edge flap surfaces. These moveable surfaces are often located at or near the leading and trailing edges of the wing, and are each moveable between a stowed position and a variety of deployed positions, depending upon the particular flight condition of the aircraft.

The wings of modern high-speed transport aircraft are joined to the fuselage at a wing/body junction. Because the wing and fuselage surfaces each have different orientations at the wing/body junction, this region generally includes more complex flow interactions than are typical for either the wing or the fuselage at regions spaced apart from the wing/body junction. The flow in this region can become even more complex when deployable devices are positioned in this region because such devices add to the three dimensionality of the local flow.

One approach to reducing the effects of the three-dimensional flow at the wing/body junction is to include a side-of-body fairing or fillet, which provides a smooth transition for the external flow surfaces at the junction. When deployable devices are located in the junction region, previous design approaches have incorporated several compromises that attempt to reduce the complexity of the flow in this region, while preserving a large degree of effectiveness for the deployed devices. One such approach includes a fillet that is designed primarily for cruise conditions. A drawback with this approach is that the flow in this region may be less than optimal from a performance standpoint when the wing flaps and/or other devices are deployed at non-cruise conditions. Another approach is to provide a seal between the moveable devices and the fuselage, with the sea! configured to operate at both cruise and non-cruise conditions. This approach typically requires large "wiping" surfaces or bumps that seal the interface between the inboard deployable device surfaces and the fuselage, in a manner that accounts for the relative motion between these components. Such surfaces can be complex to design, and/or can add weight to the aircraft. Accordingly, there exists a need for improved devices that handle the flow at the wing-body junction.

Examples of prior art are provided in documents US 2526929, US 4471925, US 4576347.

### SUMMARY

The following summary is provided for the benefit of the reader only, and is not intended to limit in any way the invention as set forth in the claims. An aircraft system in accordance with the present invention is claimed in claim 1.

In a particular embodiment, the wing is connected to a fuselage and a first gap is located between the flap and structure forward of the flap when the flap is in the deployed position, with the first gap being positioned to allow airflow between the flap and the forward structure. A second gap is located between the aft portion of the fillet and the fuselage when the flap is in the deployed position. The system further comprises a spoiler and an intermediate portion between the forward portion and the aft portion of the fillet, with the intermediate portion being moveable at least approximately in accordance with movement of the spoiler, and with the intermediate portion projecting upwardly from the spoiler upper surface. The forward portion, the aft portion and the intermediate portion are generally aligned with each other along a fore-aft axis, and the intermediate portion of the fillet is not attached directly to the spoiler. A mechanical link is positioned between the flap and the intermediate portion and is positioned to move the intermediate portion in accordance with movement of the flap. The spoiler can be operatively coupled to the flap with a fly-by-wire arrangement to move in accordance with motion of the flap.

Other aspects of the disclosure are directed to a method for controlling aircraft airflow according to claim 15.

### BRIEF DESCRIPTION OF THE DRAWINGS

Figure 1 is a partially schematic, isometric illustration of an aircraft having a wing/body junction configured in accordance with an embodiment of the disclosure.
Figure 2 is a partially schematic, enlarged, isometric rear view of an embodiment of the aircraft shown in Figure 1.
Figures 3A and 3B illustrate a fuselage, a fillet, and a wing having a trailing edge flap shown in a stowed position and a deployed position, respectively.
Figure 4 is a partially schematic, cross-sectional rear view of the fuselage, wing, flap and fillet shown in Figure 3B.
Figures 5A and 5B illustrate a fillet intermediate portion, flap, and associated linkage, with the flap in a stowed position and a deployed position, respectively.
Figure 5C schematically illustrates a fillet intermediate portion that operates in accordance with another embodiment of the disclosure.
Figure 6 is a partially schematic side view illustration of a moveable fillet portion configured in accordance with another embodiment of the disclosure.

### DETAILED DESCRIPTION

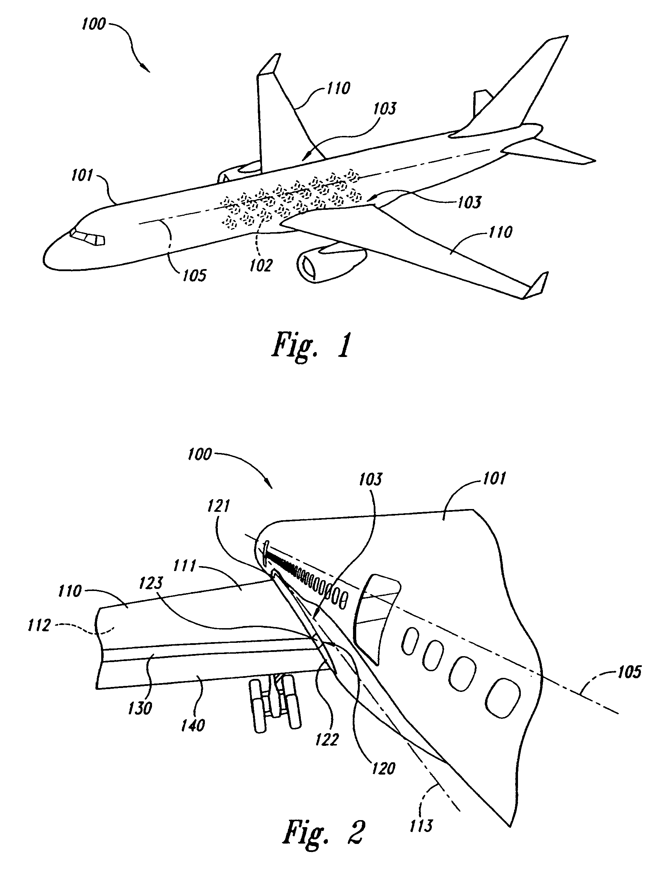

The following disclosure describes aircraft fillet fairings with fixed and moveable portions, and associated systems and methods. Certain specific details are set forth in the following description and in Figures 1-6 to provide a thorough understanding of various embodiments of the disclosure. Other details describing well-known structures and systems often associated with aircraft, aircraft wings, and associated deployable devices, are not set forth in the following description to avoid unnecessarily obscuring the description of the various embodiments.

Many of the details, dimensions, angles and other specifications shown in the Figures are merely illustrative of particular embodiments. Accordingly, other embodiments can have other details, dimensions, and specifications without departing from the present disclosure. In addition, other embodiments may be practiced without several of the details described below.

Figure 1 is a top isometric view of an aircraft 100 having wings 110 and a fuselage 101. The outboard portions of the wings 110 can optionally include winglets. The inboard portions of the wings 110 are secured to the fuselage at corresponding wing/body junctions 103. The fuselage 101 can be aligned along a longitudinal axis 105 and can include a passenger compartment 102 configured to carry a plurality of passengers (not shown). In one embodiment, the passenger compartment 102 can be configured to carry at least 50 passengers. In another embodiment, the passenger compartment 102 can be configured to carry at least 150 passengers. In further embodiments, the passenger compartment 102 can be configured to carry other numbers of passengers, and in still further embodiments (such as military embodiments), the passenger compartment 102 can be omitted or can be configured to carry cargo. In a particular embodiment, the wings 110 include deployable devices, such as flaps, and the wing/body junctions 103 can be configured to provide improved aircraft performance both when the flaps are stowed and when the flaps are deployed, as is discussed in greater detail below.

Figure 2 is a partially schematic, rear (looking forward) isometric view of the aircraft 100 shown in Figure 1. Figure 2 illustrates in greater detail the wing/body junction 103 between the fuselage 101 and the inboard portion of the wing 110. The wing 110 includes a wing upper surface 111, a lower surface 112, and one or more deployable devices. These devices can include one or more flaps 140 and/or one or more spoilers 130. For purposes of illustration, only the spoiler 130 and the fiap 140 ciosest to the fuselage 101 are shown in Figure 2, through the aircraft 100 may include additional outboard flaps 140 and/or spoilers 130. In addition, the aircraft 100 can include other deployable devices (e.g., ailerons and leading edge slats) that are not shown in Figure 2.

The wing/body junction 103 can include a fillet 120 that provides a transition (e.g., a smooth or multi-stepped contour change) between the external surface of the fuselage 101 and the external surfaces of the wing 110 and associated deployable devices. In a particular embodiment shown in Figure 2, the fillet 120 includes a forward portion 121, an aft portion 122, and an intermediate portion 123. The forward portion 121 is generally aligned adjacent to the fixed portion of the wing 110, forward of the spoiler 130 and the flap 140. The forward portion 121 has a fixed position relative to the fuselage 101 and the wing 110 projects upwardly from the wing upper surface 111, and can be physically connected to one or both of the fuselage 101 and the wing 110.

The aft portion 122 can be axially aligned in a longitudinal direction behind the forward position 121 (e.g., along wing chordwise axis 113) and can have generally the same axial position as the flap 140. The aft portion 122 projects upwardly from the upper surface of the flap 140, and in a particular embodiment, moves with or in a manner that generally tracks the motion of the flay 140, as will be discussed in greater detail below. The intermediate portion 123 can be aligned along the wing chordwise axis 113 between the forward portion 121 and the aft portion 122, and can have generally the same axial position as the spoiler 130. The intermediate portion 123 can project upwardly from the upper surface of the spoiler 130. In some embodiments, the intermediate portion 123 can track at least some part of the motion of the spoiler 130 and in other embodiments, the intermediate portion 123 can be fixed. Additional details of representative embodiments for both fixed and moveable intermediate portions 123 are described further below.

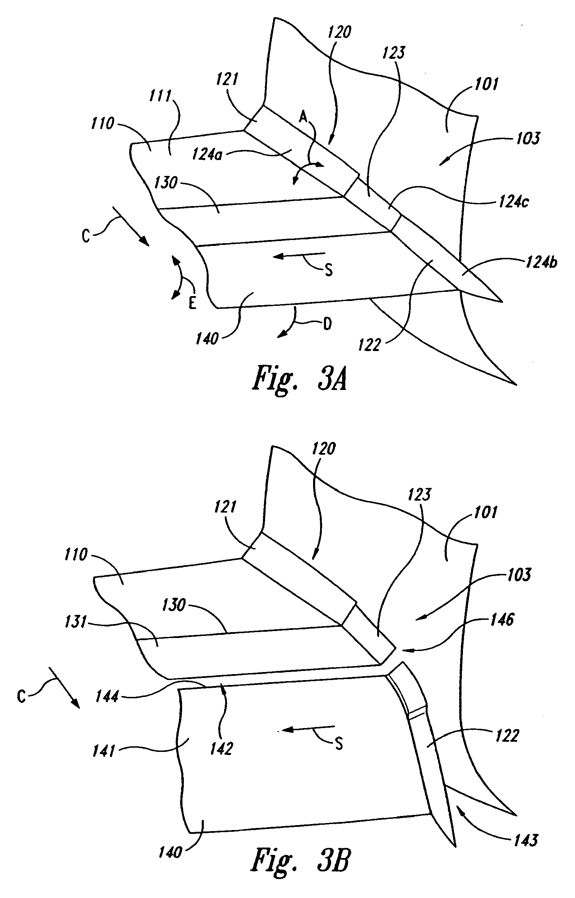

Figure 3A is a schematic illustration of a portion of the aircraft fuselage 101 and the wing 110, illustrating the flap 140 and the spoiler 130 in their stowed positions. The flap 140 can be deployed downwardly from its stowed position, as indicated by arrow D. The spoiler 130 can be deployed downwardly or upwardly from its stowed position, as indicated by arrow E. The forward portion 121 of the fillet 120 has a first outboard-facing surface 124a, the aft portion 122 has a second outboard-facing surface 124b, and the intermediate portion 123 has a third outboard-facing surface 124c. When the flap 140 and the spoiler 130 are in their stowed positions, the three outboard-facing surfaces 124a-124c are generally axially aligned with each other (e.g., generally coplanar) and form an obtuse angle A with the wing upper surface 111 so as to provide for an aerodynamically smooth transition from the fuselage 101 to the wing 110 in a spanwise direction S. The three outboard-facing surfaces 124a124c also provide an aerodynamically smooth transition from one outboard-facing surface to the next along the wing/body junction 103 in a chordwise direction C.

Figure 3B schematically illustrates the flap 140 and the spoiler 130 in one of several available deployed configurations. In this particular configuration, both the flap 140 and the spoiler 130 are deployed downwardly into a configuration representative of a typical landing configuration. In this configuration, the flap 140 has rotated and/or translated relative to the wing 110 to open a first gap 142 between a leading edge 144 of the flap 140 and the structure forward of the flap 140 (e.g., the wing 110 and/or the trailing edge of the spoiler 130). The aft portion 122 of the fillet 120 has moved with the flap 140 (e.g., downwardly relative to the wing 110) and, because the fuselage 101 curves away from the wing 110 in this region, a second gap 143 has opened between the aft portion 122 and the fuselage 101.

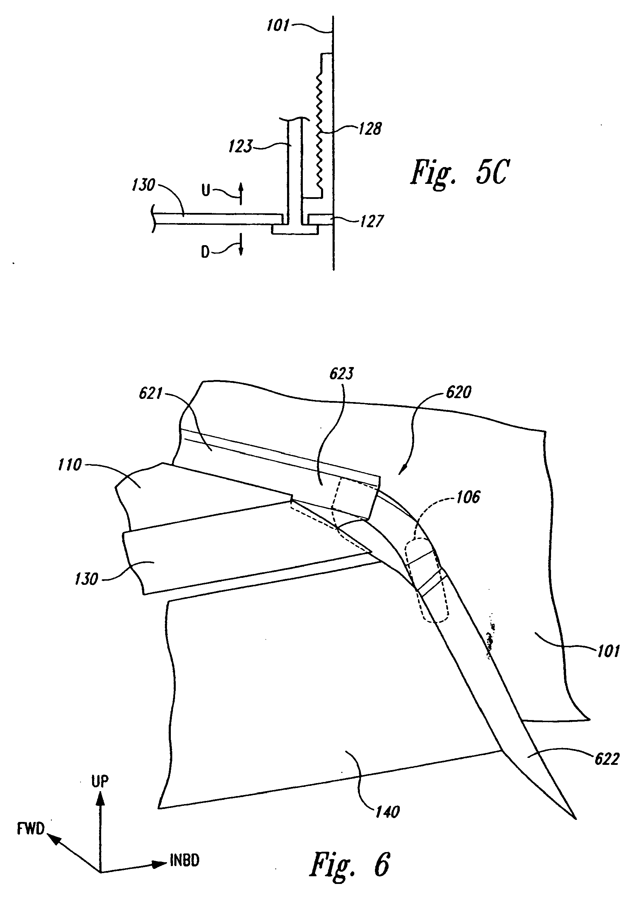

The spoiler 130 has also moved (e.g., rotated) relative to the wing 110. The intermediate portion 123 has moved relative to the wing 110, with a third gap 146 positioned between the trailing edge of the intermediate portion 123 and the leading edge of the aft portion 122, and a fourth gap-positioned between the leading edge of the intermediate portion 123 and the trailing edge of the forward portion 121. In a particular embodiment, the gap between neighboring portions of the fillet 120 can be sized consistently with gap of the corresponding neighboring portions of the wing 110. For example, the third gap 146 can be sized consistently with (e.g., generally equal to) the first gap 142. Accordingly, the general component spacing can be maintained from the fuselage 101 outwardly in the spanwise direction S. However, in other embodiments, the third gap 146 can be eliminated at some or all downwardly deployed flap positions. This result can be achieved by selectively activating the intermediate portion 123, or, as discussed later with reference to Figure 6, by appropriately shaping the intermediate portion 123 and the aft portion 122.

With the wing 110 in the configuration shown in Figure 3B, the forward portion 121 of the fillet 120 provides a smooth aerodynamic fairing between the fuselage 101 and the forward surfaces of the wing 110. The aft portion 122 of the fillet 120 has moved with the flap 140 and can accordingly isolate flow along the flap upper surface 141 from flow in the second gap 143 adjacent to the fuselage 101. In particular, airflow passing through the first gap 142 at the leading edge of the flap 140 and traveling in the chordwise direction C over the flap upper surface 141 can be restricted and/or prevented from being exposed to flow disturbances in the second gap 143. Such disturbances may result when high pressure flow on the lower surface of the flap 140 tends to wrap around the inboard edge of the flap 140 and into the second gap 143. In a generally similar manner, the intermediate portion 123 of the fillet 120 can prevent flow passing along the upper surface 131 of the spoiler 130 from being affected by flow disturbances in the region between the spoiler 130 and the fuselage 101. As discussed in greater detail later, this arrangement is expected to improve flow performance and/or efficiency in the region of the junction 103.

In a particular embodiment, the intermediate portion 123 of the fillet 120 is not attached directly to the spoiler 130, and the inboard edge of the spoiler 130 is located just outboard of the intermediate portion 123. Accordingly, when the spoiler 130 is deflected upwardly (e.g., for ground braking and/or to decrease lift), it passes alongside the intermediate portion 123, while the intermediate portion 123 remains in a fixed position. The intermediate portion 123 can be configured to follow the motion of the spoiler 130 during the spoiler's downward deployments (which is when maintaining predictable, uniform flow over the spoiler 130 is generally of particular value), and can remain out of the way of the spoiler 130 when the spoiler 130 is deployed upwardly to act as a speed brake. In its upward position, the purpose of the spoiler 130 is to disrupt flow over the wing 110 and accordingly, the value of maintaining uniform, predictable flow over the spoiler 130 at this setting is reduced.

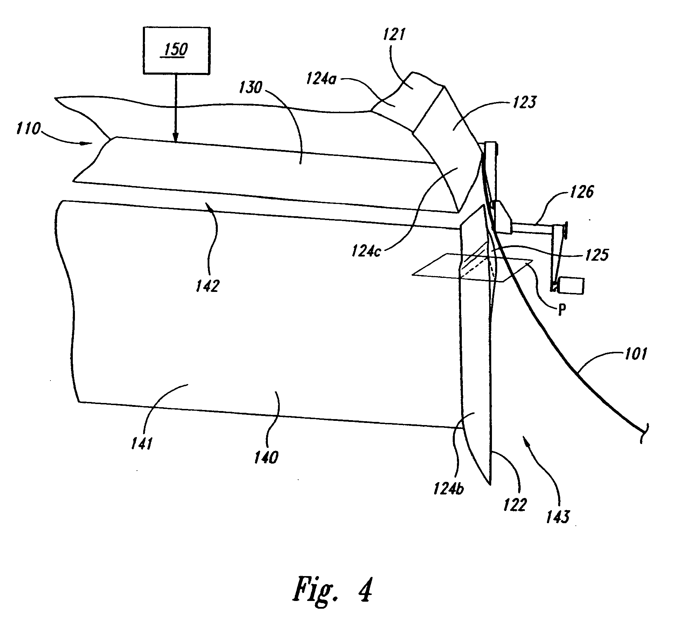

Figure 4 is a partially schematic, partially cross-sectional rear view of the fuselage 101 and the wing 110, with the flap 140 and the spoiler 130 in the deployed configuration generally similar to that shown in Figure 3B. This enlarged view illustrates the second gap 143 that has opened between the aft portion 122 and the fuselage 101 as the aft portion 122 follows the flap 140 to its deployed position. As is also shown in Figure 4, the aft portion 122 can include an inboard-facing surface 125 that is canted inwardly so as to mate with the neighboring contour of the fuselage 101 when the flap 140 is stowed. Accordingly, the aft portion 122 can have a generally triangular cross-sectional shape when intersected by plane P oriented generally normal to the flap upper surface 141.

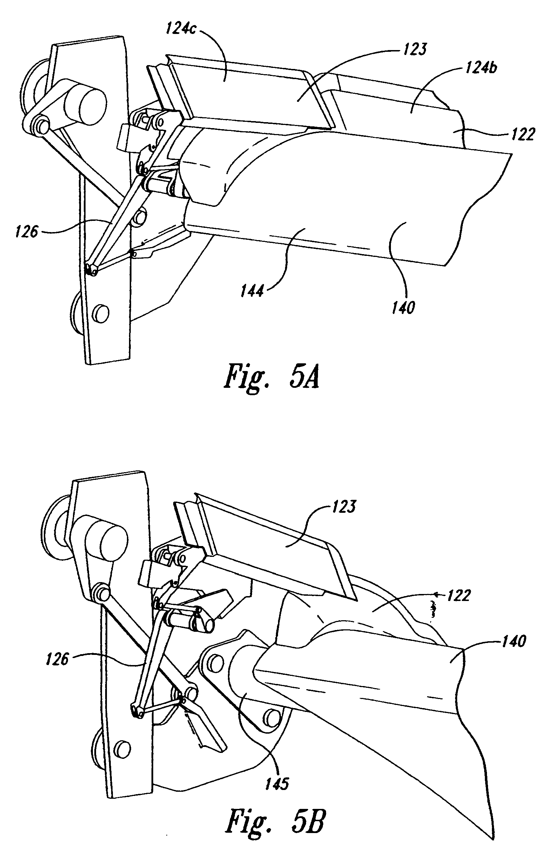

In a particular embodiment, the aft portion 122 is connected directly to the flap 140 so as to follow the motion of the flap 140 as the flap 140 moves from the stowed position to any deployed position. Accordingly, the aft portion 122 is not driven by a separate linkage. The intermediate portion 123 can, in at least some embodiments, be connected directed to the spoiler 130 so as to move with the spoiler 130 at all spoiler settings. However, in a particular embodiment, the intermediate portion 123 is not connected directed to the spoiler 130 and is instead separately driven by an intermediate portion linkage 126. As will be discussed further below with reference to Figures 5A and 5B, the intermediate portion linkage 126 can be coupled to the flap 140 so that the intermediate portion 123 tracks the motion of the flap 140 (e.g., to maintain a suitable gap, as described above with reference to Figure 3B), though it is located adjacent the spoiler 130. In another aspect of this arrangement, the spoiler 130 can be a fly-by-wire device that, under the direction of a controller 150, generally follows the motion of the flap 140 as the flap 140 is deployed downwardly and/or aft away from its stowed position. As discussed above, the spoiler 130 can also deploy upwardly from its stowed position, in a manner that does not track the motion of the flap 140, and during this portion of the spoiler motion, the intermediate portion 123 can remain in a fixed position.

Figure 5A is a partially schematic illustration of the flap 140, the aft portion 122, and the intermediate portion 123. For purposes of illustration, the spoiler 130 (Figure 4) and the forward structure of wing 110 (Figure 4) have been omitted from the view shown in Figure 5A. With the flap 140 in its stowed position (as shown in Figure 5A), part of the aft portion 122 wraps around and/or proximate to the leading edge 144 of the flap 140, behind the intermediate portion 123. As is aiso shown in Figure 5A, the intermediate portion linkage 126 connects the intermediate portion 123 to the flap 140 or the drive mechanism connected to the flap 140.

Figure 5B illustrates the flap 140 in a deployed position. The flap 140 has been driven to the deployed position by a torque tube 145. As is also shown in Figure 5B, the intermediate portion linkage 126 has driven the intermediate portion 123 to generally follow the motion of the spoiler 130 (Figure 4), which in turn follows the motion of the flap 140 at downward deployments. As discussed above, the intermediate portion 123 in this particular embodiment is not connected directly to the spoiler 130. Accordingly, the spoiler 130 can move upwardly during speed brake operations without interference from the intermediate portion 123. In a particular aspect of this embodiment, the intermediate portion linkage 126 includes a bell crank and push rod arrangement. An advantage of this arrangement is that it can be compact so as to fit within the confines of the wing/body junction region, and yet can provide the desired level of movement. In other embodiments, the mechanical link between the flap 140 and the intermediate portion 123 can have other arrangements, e.g., a roller and track arrangement.

Figure 5C is a schematic illustration of a mechanism for moving the spoiler 130 and the intermediate portion 123 in accordance with another embodiment of the disclosure. In one aspect of this embodiment, the intermediate portion 123 is biased upwardly (as indicated by arrow U) via a forcing member 128, e.g., a spring. The upward motion of the intermediate portion 123 is limited by a stop 127. When the spoiler 130 moves downwardly (as indicated by arrow D) from the position shown in Figure 5C, it drives the intermediate portion 123 downwardly along with it, away from the stop 127 and against the restoring force provided by the forcing member 128. When the spoiler 130 returns to the position shown in Figure 5C (e.g., the stowed position), the forcing member 128 brings the intermediate portion 123 along. When the spoiler 130 deploys upwardly from the position shown in Figure 5C, the stop 127 prevents the intermediate portion 123 from following.

In still another arrangement, the intermediate portion 123 can have a dedicated actuator that drives it. The actuator can be coupled to a controller (e.g., a fly-by-wire controller) that moves the intermediate portion 123 and the spoiler 130 in concert for downward spoiler deployments, and that moves the spoiler 130 independently of the intermediate portion 123 for upward deployments.

Figure 6 is a partially schematic, inboard-looking view of the aircraft fuselage 101, the wing 110, and a fillet 620 configured in accordance with another embodiment of the disclosure. In a particular aspect of this embodiment, the fillet 620 includes a forward portion 621, an intermediate portion 623 that is fixed relative to the fuselage 101, and an aft portion 622 that is fixed relative to the flap 140. In a further particular aspect of this embodiment, the intermediate portion 623 can be made integral with the forward portion 621. Accordingly, the intermediate portion 623 forms a part of the forward portion 621, and does not move with the spoiler 130 when the spoiler 130 is deployed downwardly. Instead, the intermediate portion 623 can be sized so as to extend downwardly to provide at least some flow isolation between the flow on the upper surface of the spoiler 130, and the flow along the fuselage 101, even as the spoiler 130 moves downwardly. Put another way, the intermediate portion 623 can extend alongside and below the spoiler 130 when the spoiler 130 is stowed. When the spoiler 130 is moved downwardly, the lower part of the intermediate portion 623 becomes exposed and provides a flow barrier or fence between flow along the spoiler upper surface and flow along the fuselage 101.

The aft portion 622 can provide for additional flow isolation between the spoiler 130 and the fuselage 101. For example, the aft portion 622 can extend forwardly so as to be positioned alongside the spoiler 130, and can fit into a slot between the intermediate portion 623 and the fuseiage 101. When the flap 140 and the spoiler 130 are deployed downwardly, as shown in Figure 6, the intermediate portion 623 and the forward part of the aft portion 622 can together provide flow isolation along the inboard edge of the spoiler 130. When the spoiler 130 and the fiap 140 are stowed, the aft portion 622 rotates upwardly with the flap 140 and fits between the intermediate portion 623 and the fuselage 101. In other embodiments, the arrangement of the foregoing components can be different. For example, the intermediate portion 623 can fit into a slot between the aft portion 622 and the fuselage 101.

One feature of at least some of the foregoing embodiments described above with reference to Figures 1-6 is that they can include fillet portions that move with one or more trailing edge devices. An expected benefit of this arrangement is that the fillet portions can provide for flow isolation between airflow over the upper surfaces of the deployed devices and airflow along the aircraft fuselage, even when the deployed devices are moved to positions that deviate significantly from their stowed positions. As a result, it is further expected that interference between flow alongside the fuselage and flow along the upper surface of the deployable devices will be reduced or eliminated. Furthermore, the performance of the deployable devices can be enhanced by the increased uniformity of flow over the upper surfaces of these devices. For example, it is expected that the increased uniformity of the flow over the trailing edge devices may reduce possible flow asymmetries between flows over the trailing edge devices on the left side of the aircraft, and flows over the trailing edge devices over the right side of the aircraft. This can in turn simplify trim characteristics in straight and level flight and/or simplify aircraft handling at high bank angles and/or high cross-wind conditions.

Another expected advantage of at least some embodiments in which the intermediate portion of the fillet is not fixed directly to the spoiler is that this arrangement can allow the spoiler to move to upwardly deflected positions without interference from the intermediate portion, while still allowing the intermediate portion to track the spoiler (and thereby reduce interference with flow along the fuselage) as the spoiler is deflected downwardly. This result can be achieved by an intermediate fillet portion that is "slaved" to the motion of the flap at downward deployment angles, but remains fixed as the spoiler moves to upward deployment angles. This result can also be achieved by a fixed intermediate portion that is sized to provide for flow isolation at downward spoiler deflection angles, either alone or in combination with an appropriately sized, movable aft portion.

Yet another expected benefit of at least some of the foregoing embodiments is that the presence of a fillet portion that moves with the flap and/or the spoiler can reduce the design pressure to more particularly, precisely and/or completely sea! interfaces in the wing/body junction region. For example, as is shown in Figure 6, the fuselage 101 can include a torque tube opening 606 through which the torque tube 145 (Figure 5B) extends. As the flap 140 deploys, the torque tube moves within the slot-shaped torque tube opening 606. In at least some existing arrangements, a sealable, moveable door is positioned to cover and uncover the torque tube opening 606 as the torque tube moves upwardly and downwardly within the opening 606. However, with the addition of fillet portions that move with the flap 140 and/or the spoiler 130, the requirement to precisely seal the torque tube opening 606 (and thus prevent interference between flows in and around the opening and flows over the flap 140 and spoiler 130) can be relaxed or eliminated. This can in turn simplify the construction of the components at the junction region.

From the foregoing, it will be appreciated that specific embodiments of the disclosure have been described herein for purposes of illustration, but that various modifications may be made without deviating from the disclosure. For example, the portions of the fillets and associated deployable devices may have different shapes and/or arrangements than those that are specifically set forth in the foregoing description and Figures. In particular embodiments, the aft portion of the fillet can be slaved to, rather than directly attached to, the adjacent flap. The intermediate fillet portion can be eliminated in certain embodiments, e.g., when the wing does not include a spoiler. In particular embodiments, the spoiler need not move to downward deployment angles, in which case the intermediate portion of the fillet can be fixed and possibly smaller than is shown in Figure 6. The deployable devices can simply rotate, or can move through more complex trajectories. In embodiments having double, triple, (or more) slotted flap configurations, the additional flap elements can also have corresponding movable fillet portions. In other embodiments, the flap can be ungapped, e.g., the flap can seal or approximately seal with the forward structure (the wing and/or spoiler) at some or all deployed positions.

## Claims

1. An aircraft system, comprising;
a wing (110) having an upper surface (111), an inboard portion, and an outboard portion;
a deployable flap (140) carried by the wing at the inboard portion, the flap having an upper surface and being movable relative to the wing between a stowed position and a deployed position, the flap extending aft of the wing when in the deployed position;
and **characterised by**
a fillet (120, 620) for forming an aerodynamic fairing at a wing-body junction between wing and fuselage (101), the fillet including:
a forward portion (121, 621) fixed relative to the wing, the forward portion projecting upwardly from the wing upper surface; and
an aft portion (122, 622) that is fixed to and movable with the flap, the aft portion projecting upwardly from the flap upper surface and being generally aligned with the forward portion in an axial direction.

2. The system of claim 1, further comprising a spoiler (130) carried by the wing and positioned at least partially forward of the flap, the spoiler having an upper surface and being movable relative to the wing between a stowed position and multiple deployed positions, including a first deployed position with the spoiler projecting downwardly from the wing upper surface, and a second deployed position with the spoiler projecting upwardly from the wing upper surface.

3. The system of claim 2 wherein the fillet further includes an intermediate portion (123) between the forward portion and the aft portion, the intermediate portion being movable at least approximately in accordance with movement of the spoiler to the first deployed position but not the second deployed position.

4. The system of claim 2 wherein the forward portion (621, 623) extends in an aft direction alongside and inboard of the spoiler, and wherein the aft portion (622) extends in a forward direction alongside the spoiler inboard of the forward portion, the aft portion being movable within a slot inboard of the forward portion.

5. The system of claim 4 wherein the spoiler is movable upwardly and downwardly relative to and alongside the forward portion of the fillet.

6. The system of claim 1 wherein the flap has a rounded leading edge, and wherein the aft portion of the fillet extends from the upper surface of the flap around at least a portion of the rounded leading edge of the flap.

7. An aircraft (100), comprising:
a fuselage (101); and
an aircraft system according to claim 1;
and wherein
the wing projects from the fuselage and forms a wing-body junction with the fuselage;
the deployable flap is a deployable, low-speed trailing edge flap, the flap being movable relative to the wing between a stowed position and multiple deployed positions, with an airflow gap (142) located between the flap and the wing when the flap is in at least one of the deployed positions;
the aircraft system further comprising a spoiler (130) carried by the wing and positioned at least partially forward of the flap, the spoiler being movable relative to the wing between a stowed position and multiple deployed positions and having an upper surface;
the forward portion of the fillet is fixed to the fuselage and to the wing;
the aft portion is fixed to and movable with the flap, and positioned between the flap upper surface and the fuselage to at least restrict a flow of air on the flap upper surface from exposure to flow disturbances in a region between the flap and the fuselage; and
an intermediate portion between the forward portion and the aft portion, the intermediate portion being movable at least approximately in accordance with movement of the spoiler, the intermediate portion projecting in a direction upwardly away from the spoiler upper surface, wherein the forward portion, the aft portion and the intermediate portion are generally aligned with each other along a fore-aft axis.

8. The aircraft of claim 7 wherein the intermediate portion of the fillet is not attached directly to the spoiler, and wherein the aircraft further comprises a - mechanical link (126) between the flap and the intermediate portion, the mechanical link being positioned to move the intermediate portion in accordance with movement of the flap, and wherein the spoiler is operatively coupled to the flap to move in accordance with motion of the flap.

9. The aircraft of claim 8 wherein the spoiler is coupled to a fly-by wire controller, and wherein the controller is programmed with instructions to move the spoiler in accordance with motion of the flap.

10. The aircraft of claim 7 wherein the intermediate portion is fixed to and movable with the spoiler.

11. The aircraft of claim 7 wherein the fillet has a generally triangular cross-sectional shape with an outboard-facing surface that is oriented at an obtuse angle relative to the wing upper surface.

12. The aircraft of claim 7 wherein an outboard-facing surface of the intermediate portion is generally co-planar with an outboard-facing surface of the forward portion when the spoiler is in the stowed position, and wherein an outboard-facing surface of the aft portion is generally co-planar with the outboard-facing surface of the intermediate portion when the spoiler and the flap are each in their respective stowed positions.

13. The aircraft of claim 7 wherein an outboard-facing surface of the aft portion of the fillet forms a gap (146) with the outboard-facing surface of the intermediate portion of the fillet when the spoiler and the flap are each deployed downwardly relative to their respective stowed positions.

14. The aircraft of claim 13 wherein a portion of the fillet extending forward of the flap is positioned between the intermediate portion of the fillet and the fuselage when the flap and spoiler are stowed.

15. A method for controlling aircraft airflow, comprising:
directing airflow adjacent a fuselage (101), a wing (110), and a trailing edge flap (140) of an aircraft (100);
and **characterised by**
directing the airflow along an upper surface (111) of the wing with a forward fillet portion (121, 621) projecting upwardly from the wing upper surface and positioned at a junction between the fuselage and the wing upper surface;
while the trailing edge flap is in a stowed position, using an aft fillet portion (122, 622) projecting upwardly from the flap uppper surface and being generally aligned with the forward portion in axial direction to at least restrict airflow along an upper surface of the flap from exposure to flow disturbances in a region between the flap and the fuselage; and
while the trailing edge flap is in a deployed position, at least restricting airflow along the upper surface of the flap from exposure to flow disturbances in a region between the flap and the fuselage by moving the aft fillet portion in a manner that is coordinated with motion of the flap.

## Patentansprüche

1. Luftfahrzeugsystem, das Folgendes aufweist:
eine Tragfläche (110) mit einer oberen Oberfläche (111), einem inneren Bereich und einem äußeren Bereich;
eine ausfahrbare Klappe (140), die von der Tragfläche am inneren Bereich getragen wird, wobei die Klappe eine obere Oberfläche aufweist und relativ zur Tragfläche zwischen einer eingefahrenen Stellung und einer ausgefahrenen Stellung bewegbar ist, und wobei sich die Klappe in der ausgefahrenen Stellung achtern der Tragfläche erstreckt;
**gekennzeichnet durch**
eine Kehlabdeckung (120, 620) zum Ausbilden einer aerodynamischen Verkleidung an einer Tragflächen-Rumpfverbindung zwischen einer Tragfläche und einem Rumpf (101), wobei die Kehlabdeckung Folgendes aufweist:
einen relativ zur Tragfläche befestigten bugseitigen Abschnitt (121, 621), wobei der bugseitige Abschnitt von der oberen Oberfläche der Tragfläche nach oben ragt; und
einen an der Klappe befestigten und mit der Klappe bewegbaren achternseitigen Abschnitt (122, 622), wobei der achternseitige Abschnitt von der oberen Oberfläche der Klappe nach oben ragt und in einer axialen Richtung im Wesentlichen an dem bugseitigen Abschnitt ausgerichtet ist.

2. System nach Anspruch 1, das ferner eine von der Tragfläche getragene Störklappe (130) aufweist, die zumindest teilweise bugseitig der Klappe angeordnet ist, wobei die Störklappe eine obere Oberfläche aufweist und relativ zur Tragfläche zwischen einer eingefahrenen Stellung und mehreren ausgefahrenen Stellungen, einschließlich einer ersten ausgefahrenen Stellung, bei der die Störklappe von der oberen Oberfläche der Tragfläche nach unten ragt, und einer zweiten ausgefahrenen Stellung, bei der die Störklappe von der oberen Oberfläche der Tragfläche nach oben ragt, bewegbar ist.

3. System nach Anspruch 2, worin die Kehlabdeckung zwischen dem bugseitigen Abschnitt und dem achternseitigen Abschnitt ferner einen Zwischenabschnitt (123) aufweist, wobei der Zwischenabschnitt zumindest in etwa im Einklang mit einem Verfahren der Störklappe in die erste ausgefahrene Stellung, jedoch nicht in die zweite ausgefahrene Stellung, bewegbar ist.

4. System nach Anspruch 2, worin sich der bugseitige Abschnitt (621, 623) längs und innerhalb der Störklappe in Richtung nach achtern erstreckt, und worin sich der achternseitige Abschnitt (622) längs der Störklappe und innerhalb des bugseitigen Abschnittes in eine bugseitige Richtung erstreckt, wobei der achternseitige Abschnitt innerhalb eines Langlochs innerhalb des bugseitigen Abschnitts bewegbar ist.

5. System nach Anspruch 4, worin die Störklappe relativ zum entlang des bugseitigen Abschnitts der Kehlabdeckung nach oben und unten bewegbar ist.

6. System nach Anspruch 1, worin die Klappe eine gerundete Vorderkante aufweist, und worin der achternseitige Abschnitt der Kehlabdeckung sich von der oberen Oberfläche der Klappe um zumindest einen Teil der gerundeten Vorderkante der Klappe herum erstreckt.

7. Luftfahrzeug, das Folgendes aufweist:
einen Rumpf (101); und
ein Luftfahrzeugsystem nach Anspruch 1;
und worin
die Tragfläche von Rumpf wegragt und mit dem Rumpf eine Tragflächen-Rumpfverbindung ausbildet;
die ausfahrbare Klappe von einer ausfahrbaren, Langsamflugklappe an der Tragflächenhinterkante gebildet ist, wobei die Klappe relativ zur Tragfläche zwischen einer eingefahrenen Stellung und mehreren ausgefahrenen Stellungen bewegbar ist, und wobei eine Luftströmungsöffnung (142) zwischen der Klappe und der Tragfläche angeordnet ist, wenn sich die Klappe in zumindest einer der ausgefahrenen Stellungen befindet;
das Luftfahrzeugsystem ferner eine Störklappe (130) aufweist, die von der Tragfläche getragen wird und zumindest teilweise bugseitig der Klappe angeordnet ist, wobei die Störklappe relativ zur Tragfläche zwischen einer eingefahrenen Stellung und mehreren ausgefahrenen Stellungen bewegbar ist und eine obere Oberfläche aufweist;
der bugseitige Abschnitt der Kehlabdeckung am Rumpf und an der Tragfläche befestigt ist;
der achternseitige Abschnitt an der Klappe befestigt, mit dieser bewegbar und zwischen der oberen Oberfläche der Klappe und dem Rumpf angeordnet ist, um wenigstens auszuschließen, dass eine Luftströmung an der oberen Oberfläche der Klappe in einem Bereich zwischen der Klappe und dem Rumpf Strömungsstörungen ausgesetzt ist; und
einen zwischen dem bugseitigen Abschnitt und dem achternseitigen Abschnitt gelegenen Zwischenabschnitt, wobei der Zwischenabschnitt zumindest in etwa im Einklang mit einem Verfahren der Störklappe bewegbar ist, der Zwischenabschnitt von der oberen Oberfläche der Störklappe in eine Richtung nach oben wegragt, und wobei der bugseitige Abschnitt, der achternseitige Abschnitt und der Zwischenabschnitt im Wesentlichen miteinander entlang einer Längsachse ausgerichtet sind.

8. Luftfahrzeug nach Anspruch 7, worin der Zwischenabschnitt der Kehlabdeckung nicht direkt an der Störklappe befestigt ist, und worin das Luftfahrzeug ferner eine mechanische Verbindung (126) zwischen der Klappe und dem Zwischenabschnitt aufweist, wobei die mechanische Verbindung zum Bewegen des Zwischenabschnitts im Einklang mit einer Bewegung der Klappe angeordnet ist, und worin die Störklappe mit der Klappe wirkverbunden ist, um sich im Einklang mit der Klappenbewegung zu bewegen.

9. Luftfahrzeug nach Anspruch 8, worin die Störklappe mit einer elektronischen Flugsteuerung verbunden ist, und worin die Steuerung mit Anweisungen zum Bewegen der Störklappe im Einklang mit der Bewegung der Klappe programmiert ist.

10. Luftfahrzeug nach Anspruch 7, worin der Zwischenabschnitt an der Störklappe befestigt und mit dieser bewegbar ist.

11. Luftfahrzeug nach Anspruch 7, worin die Kehlabdeckung eine im Wesentlichen dreieckförmige Querschnittsform mit einer relativ zur oberen Oberfläche der Tragfläche unter einem stumpfen Winkel ausgerichteten äußeren Oberfläche aufweist.

12. Luftfahrzeug nach Anspruch 7, worin eine nach außen weisende Oberfläche des Zwischenabschnitts, wenn sich die Störklappe in der eingefahrenen Stellung befindet, im Wesentlichen koplanar zu einer nach außen weisenden Oberfläche des bugseitigen Abschnitts ist, und worin eine nach außen weisende Oberfläche des achternseitigen Abschnitts, wenn sich sowohl die Störklappe als auch die Klappe in ihren jeweiligen eingefahrenen Stellungen befinden, im Wesentlichen koplanar zur nach außen weisenden Oberfläche des Zwischenabschnitts ist.

13. Luftfahrzeug nach Anspruch 7, worin eine nach außen weisende Oberfläche des achternseitigen Abschnitt der Kehlabdeckung mit der nach außen weisen Oberfläche des Zwischenabschnitts der Kehlabdeckung eine Öffnung (146) ausbildet, wenn sowohl die Störklappe als auch die Klappe relativ zu ihren jeweiligen eingefahrenen Stellungen nach unten ausgefahren sind.

14. Luftfahrzeug nach Anspruch 13, worin ein sich bugseitig der Klappe erstreckender Teil der Kehlabdeckung bei eingefahrener Klappe und Störklappe zwischen dem Zwischenabschnitt der Kehlabdeckung und dem Rumpf angeordnet ist.

15. Verfahren zum Steuern einer Luftströmung eines Luftfahrzeugs, das Folgendes aufweist:
Richten eines Luftstroms in Nachbarschaft zu einem Rumpf (101), einer Tragfläche (110) und einer Klappe (140) an einer Tragflächenhinterkante eines Luftfahrzeugs (100);
**gekennzeichnet durch**
Richten eines Luftstroms entlang einer oberen Oberfläche (111) der Tragfläche mit einem von der oberen Oberfläche der Tragfläche nach oben ragenden und an einer Verbindung zwischen dem Rumpf und der oberen Oberfläche der Tragfläche angeordneten bugseitigen Abschnitt (121, 621) der Kehlabdeckung;
Verwenden eines von der oberen Oberfläche der Klappe nach oben ragenden und im Wesentlichen in axialer Richtung mit dem bugseitigen Abschnitt ausgerichteten achternseitigen Abschnitts (122, 622) der Kehlabdeckung, um, während sich die Klappe an der Tragflächenhinterkante in einer eingefahrenen Stellung befindet, wenigstens auszuschießen,dass eine Luftströmung entlang einer oberen Oberfläche der Klappe in einem Bereich zwischen der Klappe und dem Rumpf Strömungsstörungen ausgesetzt ist; und
mittels eines Verschiebens des achternseitigen Abschnitts der Kehlabdeckung in einer mit der Bewegung der Klappe koordinierten Weise wenigstens aufzuschließen, dass eine Luftströmung entlang der oberen Oberfläche der Klappe in einem Bereich zwischen der Klappe und dem Rumpf Strömungsstörungen ausgesetzt ist, während sich die Klappe an der Tragflächenhinterkante in einer ausgefahrenen Stellung befindet.

## Revendications

1. Système d'avion comprenant :
une aile (110) ayant une surface supérieure (111), une partie intérieure et une partie extérieure ;
un volet déployable (140) porté par l'aile au niveau de la partie intérieure, le volet ayant une surface supérieure et étant mobile par rapport à l'aile entre une position rangée et une position déployée, le volet s'étendant à l'arrière de l'aile lorsqu'il est dans la position déployée ;
et **caractérisé par** :
un raccordement (120, 620) pour former un carénage aérodynamique au niveau d'une jonction aile-corps comprenant l'aile et le fuselage (101), le raccordement comprenant :
une partie avant (121, 621) fixe par rapport à l'aile, la partie avant faisant saillie vers le haut à partir de la surface supérieure de l'aile ; et
une partie arrière (122, 622) qui est fixée à et mobile avec le volet, la partie arrière faisant saillie vers le haut à partir de la surface supérieure du volet et étant généralement alignée avec la partie avant dans une direction axiale.

2. Système selon la revendication 1, comprenant en outre un déflecteur (130) porté par l'aile et positionné au moins partiellement à l'avant du volet, le déflecteur ayant une surface supérieure et étant mobile par rapport à l'aile entre une position rangée et plusieurs positions déployées, comprenant une première position déployée avec le déflecteur faisant saillie vers le bas à partir de la surface supérieure de l'aile, et une seconde position déployée avec le déflecteur faisant saillie vers le haut à partir de la surface supérieure de l'aile.

3. Système selon la revendication 2, dans lequel le raccordement comprend en outre une partie intermédiaire (123) entre la partie avant et la partie arrière, la partie intermédiaire étant mobile au moins approximativement selon le mouvement du déflecteur dans la première position déployée mais pas dans la seconde position déployée.

4. Système selon la revendication 2, dans lequel la partie avant (621, 623) s'étend dans une direction arrière le long de et à l'intérieur du déflecteur, et dans lequel la partie arrière (622) s'étend dans une direction avant le long du déflecteur à l'intérieur de la partie avant, la partie arrière étant mobile dans une fente à l'intérieur de la partie avant.

5. Système selon la revendication 4, dans lequel le déflecteur est mobile vers le haut et vers le bas par rapport à et le long de la partie avant du raccordement.

6. Système selon la revendication 1, dans lequel le volet a un bord d'attaque arrondi, et dans lequel la partie arrière du raccordement s'étend à partir de la surface supérieure du volet autour d'au moins une partie du bord d'attaque arrondi du volet.

7. Avion (100) comprenant :
un fuselage (101) ; et
un système d'avion selon la revendication 1 ;
et dans lequel :
l'aile fait saillie du fuselage et forme une jonction aile-corps avec le fuselage ;
le volet déployable est un volet de bord de fuite à faible vitesse déployable, le volet étant mobile par rapport à l'aile entre une position rangée et plusieurs positions déployées, avec un espace d'écoulement d'air (142) situé entre le volet et l'aile lorsque le volet est dans au moins l'une des positions déployées ;
le système d'avion comprenant en outre un déflecteur (130) porté par l'aile et positionné au moins partiellement à l'avant du volet, le déflecteur étant mobile par rapport à l'aile entre une position rangée et plusieurs positions déployées et ayant une surface supérieure ;
la partie avant du raccordement est fixée sur le fuselage et sur l'aile ;
la partie arrière est fixée sur et mobile avec le volet, et positionnée entre la surface supérieure du volet et le fuselage pour limiter au moins un écoulement d'air sur la surface supérieure du volet par rapport à l'exposition aux perturbations d'écoulement dans une région située entre le volet et le fuselage ; et
une partie intermédiaire entre la partie avant et la partie arrière,
la partie intermédiaire étant mobile au moins approximativement selon le mouvement du déflecteur, la partie intermédiaire faisant saillie dans une direction vers le haut à distance de la surface supérieure du déflecteur, dans lequel la partie avant, la partie arrière et la partie intermédiaire sont généralement alignées entre elles le long d'un axe avant-arrière.

8. Avion selon la revendication 7, dans lequel la partie intermédiaire du raccordement n'est pas fixée directement au déflecteur, et dans lequel l'avion comprend en outre une liaison mécanique (126) entre le volet et la partie intermédiaire, la liaison mécanique étant positionnée pour déplacer la partie intermédiaire selon le mouvement du volet, et dans lequel le déflecteur est couplé de manière opérationnelle au volet pour se déplacer selon le mouvement du volet.

9. Avion selon la revendication 8, dans lequel le déflecteur est couplé à un contrôleur de commande de vol électrique, et dans lequel le contrôleur est programmé avec des instructions pour déplacer le déflecteur selon le mouvement du volet.

10. Avion selon la revendication 7, dans lequel la partie intermédiaire est fixée à et mobile avec le déflecteur.

11. Avion selon la revendication 7, dans lequel le raccordement a une forme transversale généralement triangulaire avec une surface orientée vers l'extérieur qui est orientée selon un angle obtus par rapport à la surface supérieure de l'aile.

12. Avion selon la revendication 7, dans lequel une surface orientée vers l'extérieur de la partie intermédiaire est généralement coplanaire avec une surface orientée vers l'extérieur de la partie avant lorsque le déflecteur est dans la position rangée, et dans lequel une surface orientée vers l'extérieur de la partie arrière est généralement coplanaire avec la surface orientée vers l'extérieur de la partie intermédiaire lorsque le déflecteur et le volet sont chacun dans leurs positions rangées respectives.

13. Avion selon la revendication 7, dans lequel une surface orientée vers l'extérieur de la partie arrière du raccordement forme un espace (146) avec la surface orientée vers l'extérieur de la partie intermédiaire du raccordement lorsque le déflecteur et le volet sont chacun déployés vers le bas par rapport à leurs positions rangées respectives.

14. Avion selon la revendication 13, dans lequel une partie du raccordement s'étendant vers l'avant du volet est positionnée entre la partie intermédiaire du raccordement et le fuselage lorsque le volet et le déflecteur sont rangés.

15. Procédé pour contrôler l'écoulement d'air d'un avion comprenant l'étape consistant à :
diriger l'écoulement d'air adjacent à un fuselage (101), une aile (110) et un volet de bord de fuite (140) d'un avion (100) ;
et **caractérisé par** les étapes consistant à :
diriger l'écoulement d'air le long d'une surface supérieure (111) de l'aile avec une partie de raccordement avant (121 ; 621) faisant saillie vers le haut à partir de la surface supérieure de l'aile, et positionnée à une jonction située entre le fuselage et la surface supérieure de l'aile ;
alors que le volet de bord de fuite est dans une position rangée, utiliser une partie de raccordement arrière (122 ; 622) faisant saillie vers le haut à partir de la surface supérieure du volet et étant généralement alignée avec la partie avant dans la direction axiale pour limiter au moins l'écoulement d'air le long d'une surface supérieure du volet par rapport à l'exposition aux perturbations d'écoulement dans une région située entre le volet et le fuselage ; et
alors que le volet de bord de fuite est dans une position déployée, limiter au moins l'écoulement d'air le long de la surface supérieure du volet par rapport à l'exposition aux perturbations d'écoulement dans une région située entre le volet et le fuselage en déplaçant la partie de raccordement arrière de sorte qu'elle est coordonnée avec le mouvement du volet.
